# EUROPEAN PATENT SPECIFICATION

(11) **EP 0 659 821 B1**
(45) Date of publication and mention of the grant of the patent: **22.03.2000**
(21) Application number: 94309753.5
(22) Date of filing: 23.12.1994
(51) Int. Cl.: C08L 9/06, B60C 1/00, C08L 21/00

(54) **Tread rubber composition for tyres**
Kautschukmischungen für Lauffläche eines Reifens
Composition de caoutchouc pour bande de roulement de pneumatiques

(30) Priority: 27.12.1993 JP 33299193
(43) Date of publication of application: 28.06.1995
(73) Proprietor: SUMITOMO RUBBER INDUSTRIES LIMITED, Kobe-shi, Hyogo-ken (JP)
(72) Inventor: Kikuchi, Naohiko, Akashi-shi, Hyogo-ken (JP); Saito, Yuichi, Kobe-shi, Hyogo-ken (JP)
(74) Representative: Stewart, Charles Geoffrey

(56) References cited:
- EP-A- 0 628 597
- US-A- 4 745 150
- CHEMICAL PATENTS INDEX, BASIC ABSTRACTS JOURNAL Week 8629, 10 September 1986 Derwent Publications Ltd., London, GB; AN 187089 & JP-A-61 120 839 (ASAHI CHEMICAL IND KK) 7 June 1986

## Description

The present invention relates to a tread rubber composition for tires, and more specifically to a tread rubber composition for tires, which makes it possible to obtain tires having a lowered rolling resistance while maintaining grip characteristics, specifically those on a wet road surface.

Recently there is an increased demand for saving of energy resources throughout the world, and so-called fuel saving tires contributing to lowering of fuel consumption of cars have been developed. However although the conventional fuel saving tires are low in rolling resistance and meet the requirements for lowering fuel consumption, those tires are inferior in other characteristics, particularly grip characteristics on a wet road surface and thus are not satisfactory as a whole.

Among tire components, it is a tread that has the greatest influence on the rolling resistance of the tire. In order to lower the rolling resistance, it is effective to decrease an energy loss caused by deformation of the tread rubber, such as compression and bending thereof. The rolling resistance of the tire is said to be usually related to tan δ at a tread rubber temperature of around the range from 50° to 70°C, and be lowered by decreasing the tan δ value. Also while the grip characteristics of the tire on the wet road surface are influenced by a friction coefficient of the road surface itself, it is said that such characteristics also have relation to the tan δ at around 0°C, and therefore increase in the tan δ value enhances the grip characteristics.

However it is difficult to individually control the tan δ at around the range from 50° to 70°C and one at 0°C. There is a tendency that when the former is increased, the latter also increases, and decreases when the former is decreased. Thus it was difficult to lower the rolling resistance and enhance the grip characteristics at the same time.

As a method to reduce an energy loss of the tread in order to lower the rolling resistance of the tire, there has been employed, for a tread rubber, a method in which a styrene-butadiene copolymer having a low glass transition temperature is blended with polybutadiene, and natural rubber. However in such a method, though the rolling resistance was lowered, the tan δ value of the tread rubber at a temperature of around 0°C became lowered and the grip characteristics on the wet road surface remarkably decreased, and thus the tires having the required characteristics could not be obtained.

Tread rubber compositions comprising blends of styrene-butadiene copolymers with natural or polybutadiene rubbers are known from for example US-A-474150 and JP-A-6110829 and compositions containing oil-extended styrene-butadiene copolymers are known from EP-A-0628597 which is prior art under Article 54(3) EPC.

Also in recent years, it has become possible to optionally select a bonded styrene content and a 1,2-bond content in butadiene portion by preparing a styrene-butadiene copolymer by solution polymerization, and furthermore, modification and coupling techniques of molecular ends have been established. As a result, a technique for controlling energy loss of the copolymer is under development. While the study has been proceeded by using a tread rubber employing such a copolymer to assure a small energy loss, there has not yet been obtained the tread rubber both lowering the rolling resistance and enhancing the grip characteristics on the wet road surface.

The present invention was made to solve the above-mentioned problems and furnish a tread rubber composition for tires enabling the rolling resistance to be decreased without lowering the grip characteristics of the tire on the wet road surface.

According to the present invention there is provided a tread rubber composition for tires, which comprises rubber components consisting, when the weight of the rubber components is assumed to be 100 parts by weight, of 20 to 80 parts by weight of a diene rubber and 80 to 20 parts by weight of one or more of styrene-butadiene copolymers having a glass transition temperature of from -50° to -25°C and satisfying a relation shown by the equation: 4.8X-Y ≥ 32, in which a bonded styrene content is represented by X% by weight and a 1,2-bond content in butadiene portion is represented by Y% by weight; a temperature dispersion curve of tan δ of the rubber composition having two peaks; the temperature difference between the peak at the highest temperature side thereof and a single peak of a rubber composition using the styrene-butadiene copolymer alone as a rubber component being within 10°C; and a tan δ measured at 50°C being 0.08 to 0.20.
Fig. 1 shows a temperature dispersion curve of a tan δ of a tread rubber composition of Example 1;
Fig. 2 shows a temperature dispersion curve of a tan δ of a tread rubber composition of Example 2;
Fig. 3 shows a temperature dispersion curve of a tan δ of a tread rubber composition of Example 5;
Fig. 4 shows a temperature dispersion curve of a tan δ of a tread rubber composition of Comparative Example 1;
Fig. 5 shows a temperature dispersion curve of a tan δ of a tread rubber composition of Comparative Example 2;
Fig. 6 shows a temperature dispersion curve of a tan δ of a tread rubber composition of Comparative Example 4;
Fig. 7 shows a temperature dispersion curve of a tan δ of a tread rubber composition of Comparative Example 6.
Fig. 8 shows relation among a bonded styrene content X (%) and a 1,2-bond content Y (%) in butadiene portion of the styrene-butadiene copolymer shown in Table 1 and a glass transition temperature (Tg).

The temperature dispersion curve of the tan δ of the tread rubber composition of the present invention has two peaks, while the rubber composition, which is prepared in the same manner as the aforesaid tread rubber composition except that the specific styrene-butadiene copolymer is used alone as a rubber component, has a single peak. The temperature difference between that single peak and the peak at the highest temperature side of the tread rubber composition of the present invention is within 10°C, preferably within 6°C, more preferably within 3°C by reason of maintaining the grip characteristics which the specific styrene-butadiene copolymer has. When the difference is more than 10°C, there is a tendency that the grip characteristics of the specific styrene-butadiene copolymer becomes lessened by blending, and those of the blend rubber components lower resultantly.

In the tread rubber composition for the tire of the present invention, when the bonded styrene content of the specific styrene-butadiene copolymer used as the rubber component is represented by X % by weight, and a 1,2-bond content in butadiene portion of the copolymer is represented by Y % by weight, it is necessary for the specific styrene-butadiene copolymer to satisfy a relation shown by 4.8X-Y ≥ 32. By the reason that two clear peaks are obtained, a relation shown by 4.8X-Y ≥ 70 is desirable. The upper limit of 4.8X-Y is 150 in order to lower the glass transition temperature of the specific styrene-butadiene copolymer down to not more than -25°C. When 4.8X-Y is smaller than 32, there is a tendency that the temperature dispersion curve of the tan δ does not have plural peaks, or even if there are plural peaks, the temperature difference between the peak at the highest temperature side and the single peak of the rubber composition prepared by using the specific styrene-butadiene copolymer alone as the rubber component as mentioned above becomes larger that 10°C, so that the tan δ value at a temperature around the range from 50°C to 70°C lowers, to decrease in the rolling resistance but, at the same time, the tan δ value at around 0°C lowers not to obtain enough grip characteristics on the wet road surface.

The glass transition temperature of the specific styrene-butadiene copolymer is -50°C to - 25°C, and is preferably -45° to -25°C, more preferably -40° to -30°C by reason of a balance of the grip characteristics and the rolling resistance. When lower than -50°C, there is a tendency that while the rolling resistance decreases, the tan δ at around 0°C becomes lowered and as a result thereof the grip characteristics on the wet road surface becomes insufficient. The glass transition temperature higher than -25°C tends to raise the tan δ around the range from 50° to 70°C and as a result, to make the rolling resistance lager to increase heat generation. Among the specific styrene-butadiene copolymers, a non-oil-extended polymer is preferable because the use of oil-extended type of polymers results in increase in heat generation, for example, due to the increased amount of carbon blacks for maintaining a hardness of the rubber.

As a rubber component, there is used a diene rubber in addition to the above-mentioned specific styrene-butadiene copolymer. Examples of the diene rubbers are, for instance, the other styrene-butadiene copolymers not satisfying the above-mentioned equation of 4.8X-Y ≥ 32, polyisoprene rubbers, natural rubbers, high-cis butadiene rubbers and low-cis butadiene rubbers. Those rubbers can be used alone or in combination with each other. The natural rubbers and polyisoprene rubbers are preferable from a point of non-compatibility with the aforesaid specific styrene-butadiene copolymer.

In 100 parts of rubber components, a total amount of one or more of the aforesaid specific styrene-butadiene copolymers is 80 to 20 parts, preferably 80 to 40 parts from a point to enhance wet grip characteristics, and the remaining amount, i.e. 20 to 80 parts, preferably 20 to 60 parts is occupied by the above-mentioned diene rubber compositions. When the specific styrene-butadiene copolymer is more than 80 parts, the rolling resistance tends to become worse, and when less than 20 parts, the grip characteristics tend to become inferior.

The tan δ measured at 50°C of the tread rubber composition for the tire of the present invention is preferably 0.08 to 0.20, particularly preferably 0.08 to 0.15, and more preferably 0.10 to 0.15 in order to obtain a suitably small rolling resistance. When less than 0.08, the grip characteristics tend to be insufficient, and when more than 0.20, the rolling resistance tends to become worse.

Other than the above-mentioned rubber components, the tread rubber composition of the present invention may be blended, if necessary, with additives to be usually used for rubber compositions for tires, for example, carbon blacks, fillers, antioxidants, softeners, processing aids, zinc oxides, stearic acid, plasticizers, vulcanizing accelerators, vulcanizing agents and sulfur in proper amounts thereof.

The tread composition of the present invention is obtained by mixing the aforesaid rubber components, carbon blacks and other additives. After vulcanization, the tread rubber composition of the present invention indicates the tan δ temperature dispersion curve and the tan δ at 50°C as mentioned hereinbefore.

The tread rubber composition of the present invention is explained by means of the following Examples.

### Example 1

The tread rubber compositions were obtained according to the following formulation by the use of the styrene-butadiene copolymer (SBR-A) having the glass transition temperature, bonded styrene content (X), 1,2-bond content (Y) in butadiene portion and the value of 4.8X-Y shown in Table 1. The bonded styrene content and the 1,2-bond content were measured with the FT-IR transmission method.

| | Parts by weight |
|---|---|
| SBR-A | 60 |
| Natural rubber | 40 |
| Carbon black | 60 |
| Aromatic oil | 18 |
| Stearic acid | 2 |
| Zinc oxide | 3 |
| Antioxidant | 1 |
| Vulcanizing accelerator | 1 |
| Sulfur | 1.75 |

As the carbon black, the antioxidant and the vulcanizing accelerator, there were used N339 of Showa Cabot Co., Ltd., N-(1,3-dimethylbutyl)-N-phenyl-p-phenylenediamine of Monsanto Japan Ltd. and N-cyclohexyl-2-benzothiazyl/sulfenamide of Sanshin Kagaku Kabushiki Kaisha, respectively.

Also tires having a size of 185/65R14 were manufactured by the use of the tread rubber compositions.

The physical properties of the above-mentioned tread rubber compositions and the characteristics of the tires were evaluated as follows:

### (Physical Properties of Tread Rubber Composition)

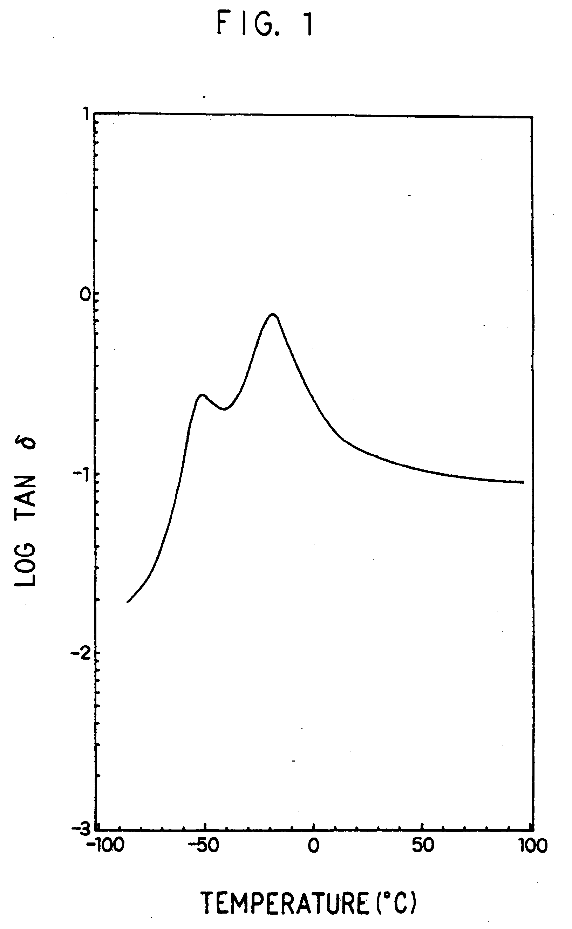

The temperature dispersion curve of the tan δ of the tread rubber composition was obtained by the use of a viscoelasticity spectrometer (available from Kabushiki Kaisha Iwamoto Seisakusho) in the temperature range of from -100°C to 100°C under the conditions of 10Hz of frequency, 10% of static strain, ±0.25% of dynamic strain, and 2°C/minute of heat elevation rate. The temperature dispersion curve of the tan δ is shown in Fig. 1. The number of peaks is 2, and the peak temperature at the highest temperature side is -19°C.

Also the similar tread rubber composition was prepared by the use of 100 parts of the styrene-butadiene copolymer without the use of natural rubber, and the temperature dispersion curve of the tan δ having a single peak was obtained in the same manner. The peak temperature of the peak was -16°C, and a difference from the above-mentioned peak temperature at the highest temperature side is 3°C.

Also there was measured the tan δ value at 50°C by the use of the same viscoelasticity spectrometer under the conditions of 10 Hz of frequency, 10% of static strain and ±1.00% of dynamic strain, and the measured value was 0.16.

### (Characteristics of Tire)

### Rolling resistance

The rolling resistance was measured with a 1707.6 mm dia. Drum type rolling resistance measuring equipment (available from T & T Co., Ltd) under the conditions of a speed of 80 km/hr and a load of 3.432 KN [350 kgf]. The index of the rolling resistance was 105, on the basis of one obtained in Comparative Example 5 referred to hereinafter which is assumed to be 100. The larger the index is, the smaller the rolling resistance. Contrarily the smaller the index is, the larger the rolling resistance.

### Braking characteristic on wet asphalt road

The tires were attached to 1600 cc passenger car and the car was run on an asphalt road of a skid number of 50. The time required for decelerating from 40 km/hr to 20 km/hr was measured. The result is shown as the index to the value (100) of Comparative Example 5 referred to hereinafter, and the obtained index was 115. The larger the index is, the more excellent the braking characteristic, and the smaller the index is, the more inferior the braking characteristic.

The results of the above-mentioned tests are shown in Table 2.

### Examples 2 to 6

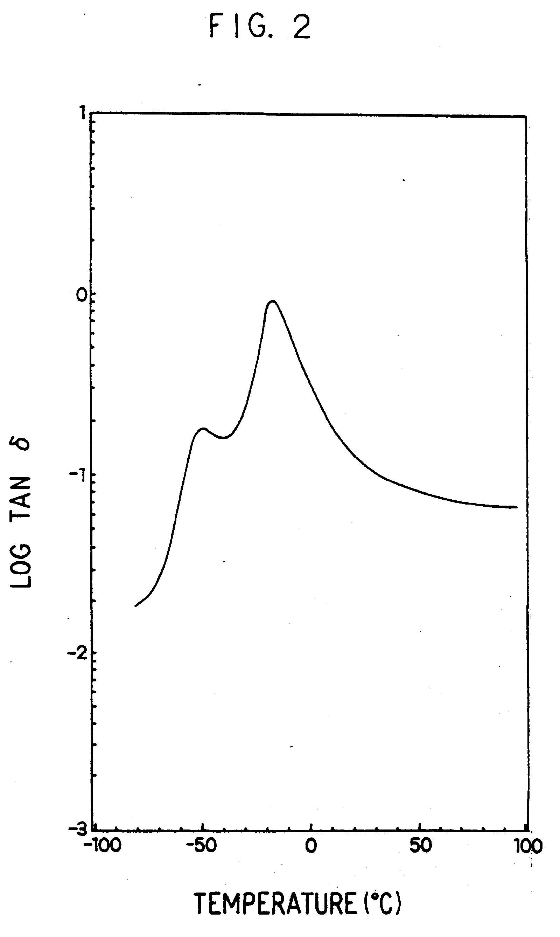

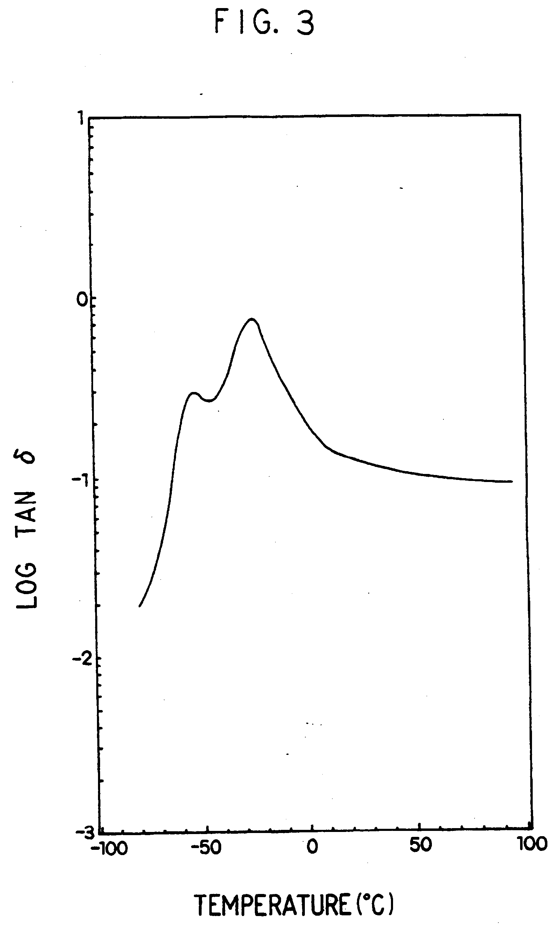

The tread rubber compositions were prepared in the same manner as in Example 1 except that the blending ratios of the rubber components containing styrene-butadiene copolymers (SBR-A and SBR-B) having the physical properties shown in Table 1, the carbon blacks and the aromatic oils were changed as shown in Table 2. By the use of those tread rubber compositions, the tires similar to those of Example 1 were manufactured. The physical properties of the tread rubber compositions and the characteristics of the tires were evaluated in the same manner as in Example 1. The results are shown in Table 2. The temperature dispersion curves of the tan δ of the tread rubber compositions of Examples 2 and 5 are shown in Fig. 2 and Fig. 3, respectively.

### Comparative Examples 1 to 6

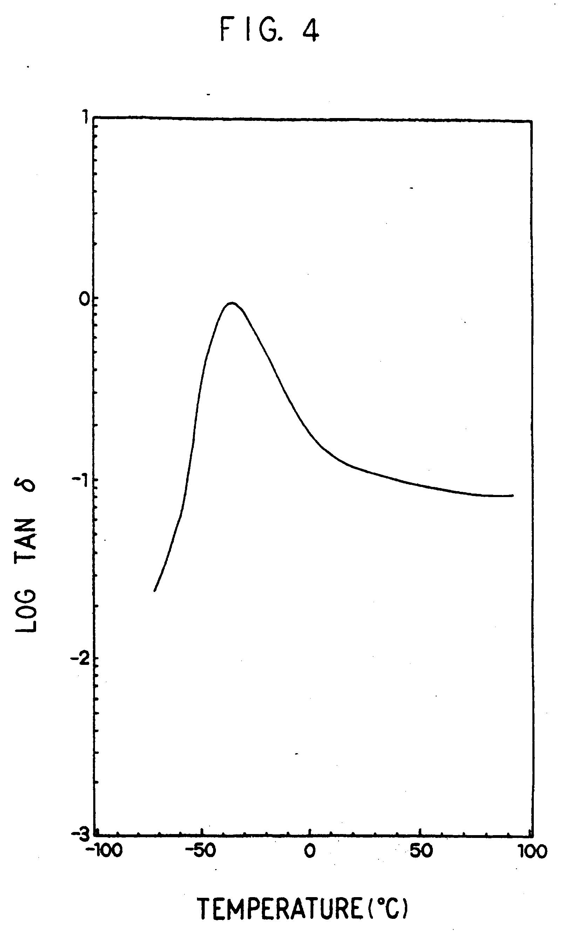

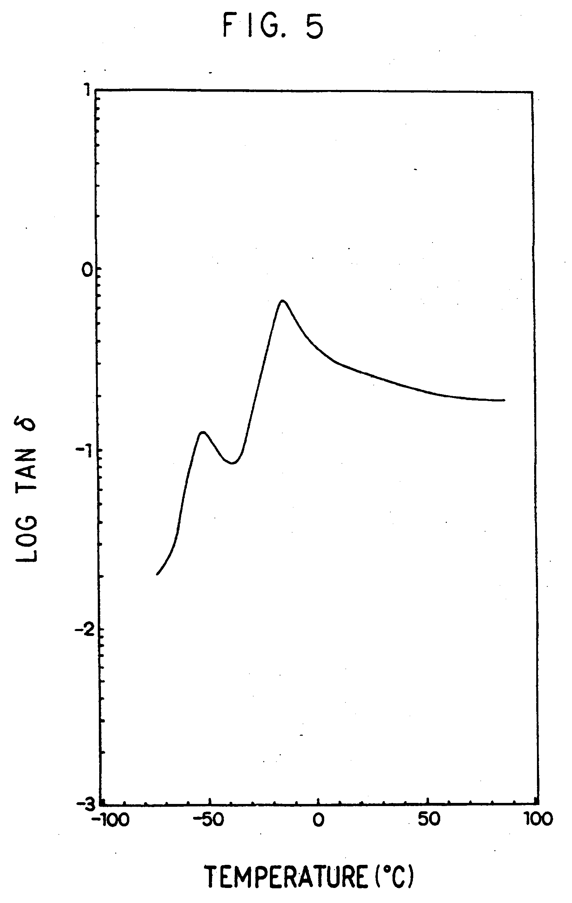

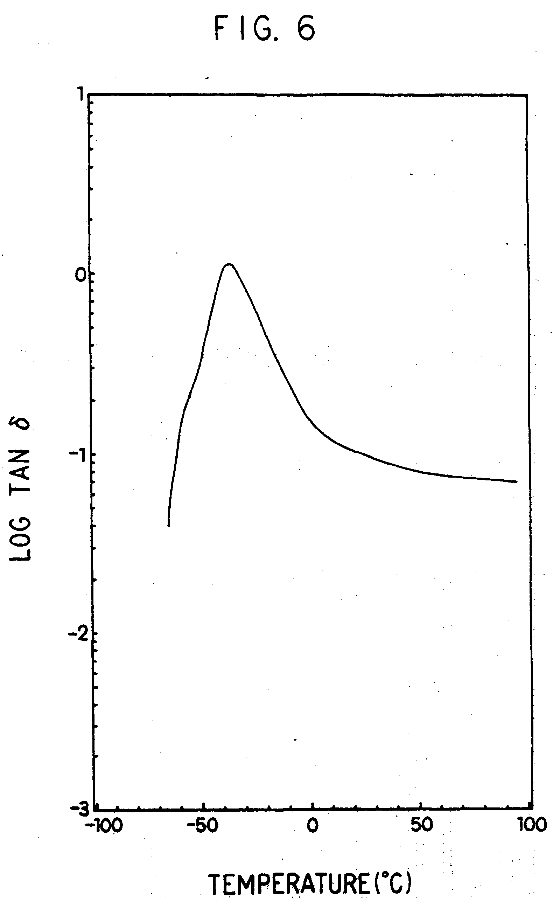

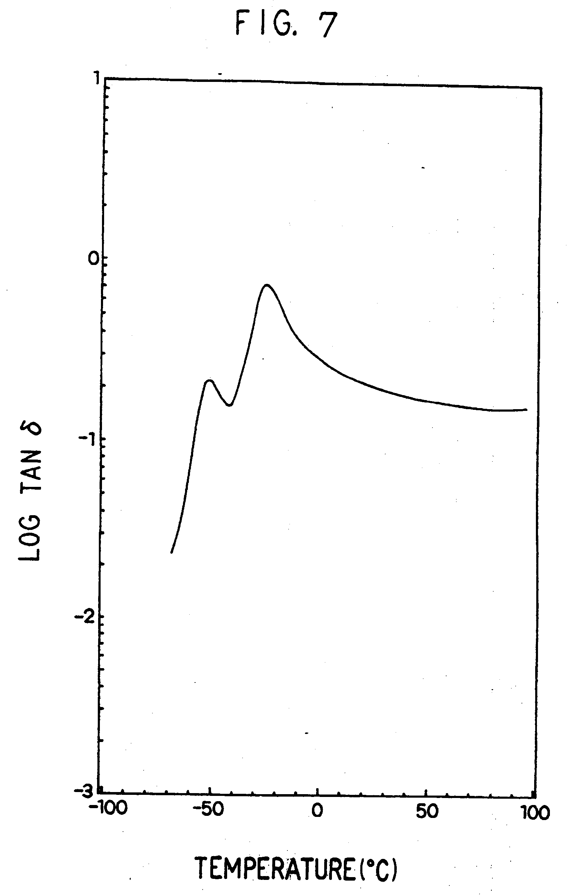

The tread rubber compositions were prepared in the same manner as in Example 1 except that the blending ratios of the rubber components containing the styrene-butadiene copolymers (SBR-C, -D, -E, -F and -G) having the physical properties shown in Table 1, the carbon blacks and the aromatic oils were changed as shown in Table 2. By the use of the tread rubber compositions, the tires similar to those of Example 1 were manufactured. The physical properties of the tread rubber compositions and the characteristics of the tires were evaluated in the same manner as in Example 1. The results are shown in Table 2. The temperature dispersion curves of the tan δ of the tread rubber compositions of Comparative Examples 1, 2, 4 and 6 are shown in Fig. 4, 5, 6 and 7, respectively.

The reason why the characteristics of the tires were evaluated based on the tire of Comparative Example 5 is that the tire of Comparative Example 5 has characteristics corresponding to those of usual tires.

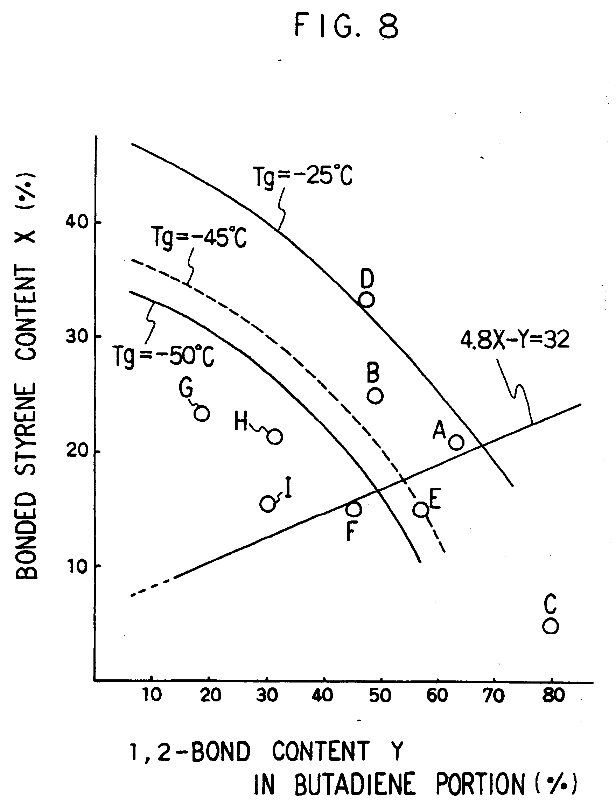

Fig. 8 is a graph showing the data of each SBR shown in Table 1 by plotting the bonded styrene content (X) on the axis of ordinate and the 1, 2 bond content (Y) in butadiene portion on the axis of abscissa.

Fig. 8 also shows the lines of -50°C, -45°C and -25°C of Tg and the line of 4.8X-Y = 32 for reference.

The bonded styrene content and the 1, 2 bond content in butadiene portion were measured with the FT-IR transmission method (by the use of FT-IR 1600 of Perkin-Elmer).

Each SBR given in Table 1 are the following products.
- SBR-A:: Trade name NIPOL NS116 (available from Nippon Zeon Co., Ltd.)
- SBR-B:: Trial product
- SBR-C:: Trade name SL599 (available from Japan Synthetic Rubber Co., Ltd.)
- SBR-D:: Trial product
- SBR-E:: Trade name SL574 (available from Japan Synthetic Rubber Co., Ltd.)
- SBR-F:: Trade name Asaprene 1150 (available from Asahi Chemical Industry Co., Ltd.)
- SBR-G:: SBR 1500 (available from Sumitomo Chemical Co., Ltd.)
- SBR-H:: Trade name SL552 (available from Japan Synthetic Rubber Co., Ltd)
- SBR-I:: Trade name NIPOL NS114 (available from Nippon Zeon Co., Ltd.)

**Table 1**

| Copolymer | Glass transition temperature (°C) | Bonded styrene content X (% by weight) | 1,2-bond content Y in 4.8X-Y butadiene portion (% by weight) | |
|---|---|---|---|---|
| SBR-A | -33 | 21 | 63 | 37.8 |
| SBR-B | -39 | 25 | 49 | 71.0 |
| SBR-C | -39 | 5 | 80 | -56.0 |
| SBR-D | -23 | 33 | 47 | 111.4 |
| SBR-E | -48 | 15 | 57 | 15.0 |
| SBR-F | -55 | 15 | 45 | 27.0 |
| SBR-G | -53 | 23.5 | 18 | 94.8 |
| SBR-H | -55 | 22 | 31 | 74.6 |
| SBR-I | -52 | 16 | 30 | 46.8 |

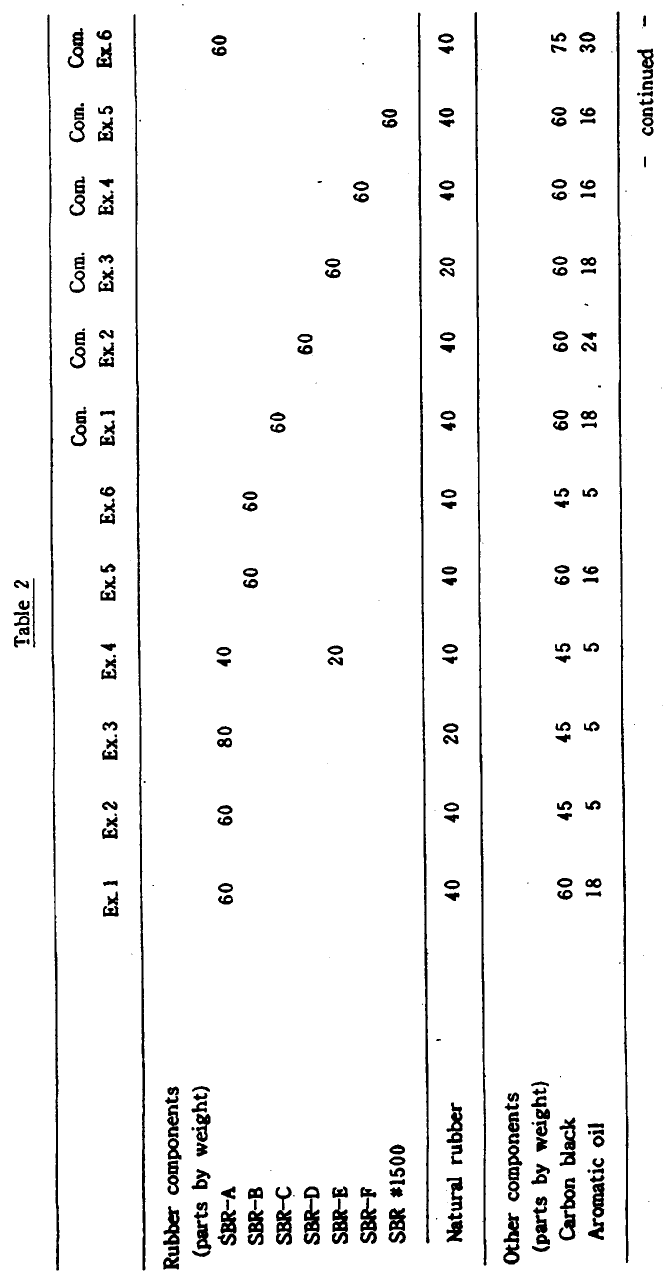

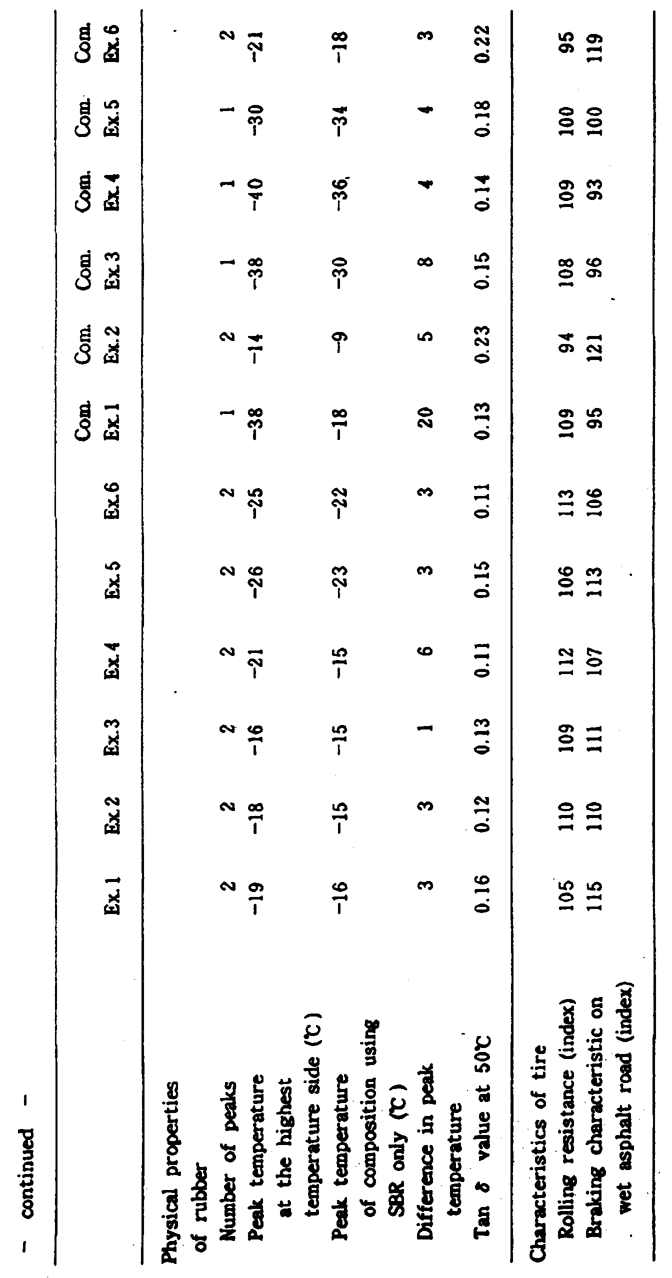

The results shown in Table 2 indicate that the rolling resistances of the tires of Examples 1 to 6 are low and the grip characteristics on the wet road surface is excellent.

In the Comparative Example 1, since the styrene-butadiene copolymer (SBR-C) does not meet the requirement of 4.8X-Y ≧ 32, the temperature dispersion curve of the tan δ has only a single peak, the peak temperature is low and differs from the peak temperature of the rubber composition using the styrene-butadiene copolymer alone as the rubber component by as much as 20°C, and the grip characteristics on the wet road surface are inferior.

Comparative Example 2 is not preferable because the tan δ at 50°C becomes larger and the rolling resistance increases since the glass transition temperature of the styrene-butadiene copolymer (SBR-D) is higher than -25°C.

In Comparative Example 3, since the styrene-butadiene copolymer (SBR-E) does not meet the requirement of 4.8X-Y ≧ 32, the temperature dispersion curve of the tan δ has only a single peak, the peak temperature is low and the grip characteristics on a wet road surface are inferior.

In Comparative Example 4, since the styrene-butadiene copolymer (SBR-F) does not meet the requirement of 4.8X-Y ≧ 32 and also the glass transition temperature is low, the peak temperature is low and the grip characteristics on the wet road surface are inferior.

Comparative Example 6 is not preferable since the tan δ value at 50°C exceeds 0.20 and the rolling resistance is high, although the styrene-butadiene copolymer (SBR-A) is preferable.

The tread rubber compositions for tires of the present invention can provide tires having a low rolling resistance and excellent grip characteristics on a wet road surface, thus maintaining braking characteristics and achieving lower fuel consumption of cars.

## Claims

1. A tread rubber composition for tires, which comprises rubber components consisting, when the weight of the rubber components is assumed to be 100 parts by weight, of 20 to 80 parts by weight of a diene rubber and 80 to 20 parts by weight of one or more styrene-butadiene copolymers having a glass transition temperature of from -50°C to -25°C and satisfying a relation shown by the equation: 4.8X-Y ≥ 32, in which a bonded styrene content is represented by X% by weight and a 1,2-bond content in butadiene portion is represented by Y% by weight; characterised in that a temperature dispersion curve of tan δ of the rubber composition having two peaks; the temperature difference between the peak on the highest temperature side thereof and a single peak of a rubber composition using the styrene-butadiene copolymer alone as a rubber component being within 10°C; and a tan δ measured at 50°C being 0.08 to 0.20.

2. The tread rubber composition for tires of Claim 1, wherein the diene rubber is natural rubber or polyisoprene rubber.

3. The tread rubber composition for tires of Claim 1, wherein the styrene-butadiene copolymer has a glass transition temperature of from -45° to -25°C.

4. The tread rubber composition for tires of Claim 1, wherein the styrene-butadiene copolymer is a non-oil-extended polymer.

5. The tread rubber composition for tires of Claim 1, wherein the styrene-butadiene copolymer has a glass transition temperature of from -40°C to -30°C.

## Patentansprüche

1. Laufstreifenkautschukzusammensetzung für Reifen, die Kautschukbestandteile umfaßt, die, unter der Annahme, daß das Gewicht der Kautschukbestandteile 100 Gewichtsteile beträgt, aus 20 bis 80 Gewichtsteilen eines Dienkautschuks und 80 bis 20 Gewichtsteilen eines oder mehrerer Styrol-Butadien-Copolymere bestehen, die eine Glasübergangstemperatur zwischen -50 °C und -25 °C aufweisen und eine Relation erfüllen, die durch die Gleichung 4,8X-Y ≥ 32 gezeigt ist, wobei ein Gehalt an gebundenem Styrol durch X Gewichts-% dargestellt ist und ein 1,2-Bindungsgehalt in einem Butadienanteil durch Y Gewichts-% dargestellt ist, dadurch gekennzeichnet, daß eine Temperaturverteilungskurve des tan δ der Kautschukzusammensetzung zwei Spitzen aufweist, daß die Temperaturdifferenz zwischen der Spitze auf ihrer Seite mit der höchsten Temperatur und einer einzelnen Spitze einer Kautschukzusammensetzung, die alleine das Styrol-Butadien-Copolymer als einen Kautschukbestandteil verwendet, innerhalb 10 °C liegt, und daß tan δ, gemessen bei 50 °C, 0,08 bis 0,20 beträgt.

2. Laufstreifenkautschukzusammensetzung für Reifen nach Anspruch 1, wobei der Dienkautschuk Naturkautschuk oder Polyisoprenkautschuk ist.

3. Laufstreifenkautschukzusammensetzung für Reifen nach Anspruch 1, wobei das Sryrol-Butadien-Copolymer eine Glasübergangstemperatur zwischen -45 ° und -25 °C aufweist.

4. Laufstreifenkautschukzusammensetzung für Reifen nach Anspruch 1, wobei das Styrol-Butadien-Copolymer ein nicht mit Öl gestrecktes Polymer ist.

5. Laufstreifenkautschukzusammensetzung für Reifen nach Anspruch 1, wobei das Styrol-Butadien-Copolymer eine Glasübergangstemperatur zwischen -40 °C und -30 °C aufweist.

## Revendications

1. Composition de caoutchouc pour bande de roulement de pneumatique, qui contient les ingrédients de caoutchouc constitués, lorsque le poids des ingrédients de caoutchouc est supposé être égal à 100 parties en poids, par 20 à 80 parties en poids d'un caoutchouc de diène et par 80 à 20 parties en poids d'un ou plusieurs copolymères de butadiène-styrène ayant une température de transition vitreuse comprise entre -50 °C et -25 °C et correspondant à la relation indiquée par l'équation 4,8 X - Y ≥ 32, dans laquelle la teneur en styrène lié est représentée par X % en poids et la teneur en liaison 1,2 de la partie butadiène est représentée par Y % en poids, caractérisée en ce qu'une courbe de dispersion en température de tgδ de la composition de caoutchouc a deux pics, la différence de températures entre le pic du côté des températures élevées et un pic unique d'une composition de caoutchouc ayant un copolymère de butadiène-styrène comme seul ingrédient de caoutchouc est inférieure à 10 °C, et la valeur tgδ mesurée à 50 °C est comprise entre 0,08 et 0,20.

2. Composition de caoutchouc de bande de roulement de pneumatique selon la revendication 1, dans laquelle le caoutchouc de diène est le caoutchouc naturel ou un caoutchouc de polyisoprène.

3. Composition de caoutchouc de bande de roulement de pneumatique selon la revendication 1, dans laquelle le copolymère de butadiène-styrène a une température de transition vitreuse comprise entre -45 °C et -25 °C.

4. Composition de caoutchouc de bande de roulement de pneumatique selon la revendication 1, dans laquelle le copolymère de butadiène-styrène est un polymère non dilué par une huile.

5. Composition de caoutchouc de bande de roulement de pneumatique selon la revendication 1, dans laquelle le copolymère de butadiène-styrène a une température de transition vitreuse comprise entre -40 °C et -30 °C.
